(19) Europäisches Patentamt
European Patent Office
Office européen des brevets

(11) EP 2 378 286 B1

(12) FASCICULE DE BREVET EUROPEEN

(45) Date de publication et mention
de la délivrance du brevet:
**11.12.2013 Bulletin 2013/50**

(51) Int Cl.:
*G01N 29/036* (2006.01)     *G01N 29/42* (2006.01)
*G01N 29/24* (2006.01)      *G01N 29/44* (2006.01)
*B60C 23/04* (2006.01)      *G01H 13/00* (2006.01)
*G01S 13/75* (2006.01)      *G08C 17/02* (2006.01)

(21) Numéro de dépôt: **11160726.3**

(22) Date de dépôt: **31.03.2011**

(54) **Procédé d'interrogation rapide de capteurs à ondes élastiques**

Schnelles Abfrageverfahren für elastische Wellen-Transducer

Rapid interrogation method for elastic wave transducers

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2010 FR 1052546**

(43) Date de publication de la demande:
**19.10.2011 Bulletin 2011/42**

(73) Titulaires:
• **Senseor**
  **06250 Mougins (FR)**
• **Centre National de la Recherche Scientifique**
  **75016 Paris (FR)**

(72) Inventeurs:
• **Droit, Christophe**
  **25000 Besancon (FR)**
• **Friedt, Jean-Michel**
  **25000 Besancon (FR)**
• **Martin, Gilles**
  **25870 CHATILLON LE DUC (FR)**

• **Ballandras, Sylvain**
  **25000 Besancon (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A1-03/019461     WO-A1-2008/015129
WO-A2-2007/136550   US-B1- 6 362 737

• **FRIEDT J-M ET AL: "A wireless interrogation system exploiting narrowband acoustic resonator for remote physical quantity measurement", REVIEW OF SCIENTIFIC INSTRUMENTS, AIP, MELVILLE, NY, US, vol. 81, no. 1, 11 janvier 2010 (2010-01-11), pages 14701-14701, XP012134609, ISSN: 0034-6748, DOI: DOI:10.1063/1.3267311**

**Description**

Le domaine de l'invention est celui des dispositifs d'interrogation de capteurs passifs et notamment de capteurs à ondes acoustiques de surface.

Ces capteurs sont connus pour être utilisés par exemple comme capteur de température ou de pression et comprennent généralement au moins un résonateur comportant une micro-structure déposée à la surface d'un substrat piézoélectrique. Un exemple de capteur peut typiquement comporter deux transducteurs à peignes d'électrodes inter-digitées placés entre des réseaux réflecteurs. Les réseaux réflecteurs se comportent comme des miroirs et il existe donc des fréquences de résonance pour lesquelles le trajet retour dans la cavité est égal à un nombre entier de longueurs d'onde. Les modes de résonance pour ces fréquences sont excités par le transducteur placé entre les miroirs.

Ce type de capteur peut être interrogé à distance, en connectant l'entrée du transducteur à une antenne radio-fréquence RF. Lorsque l'antenne reçoit un signal électromagnétique, celui-ci donne naissance à des ondes sur la surface du substrat qui sont elles-mêmes reconverties en énergie électromagnétique sur l'antenne. Ainsi, le dispositif constitué d'un ensemble de résonateurs connecté à une antenne a une réponse aux fréquences de résonance des résonateurs qu'il est possible de mesurer à distance. On peut ainsi réaliser des capteurs interrogeables à distance. Cette possibilité est un avantage important des ondes acoustiques de surface et peut être utilisée notamment dans le cadre des capteurs de pression pneumatiques. Il est en effet intéressant dans ce type d'application de pouvoir placer le capteur dans le pneumatique alors que l'électronique d'interrogation est embarquée à bord du véhicule.

Selon l'art connu, des systèmes d'interrogation à distance utilisent des signaux d'interrogation sous forme d'impulsions (typiquement de période environ 25 μs) qui transitent via une antenne émettrice en direction d'une antenne réceptrice connectée au capteur à ondes de surface dénommé ci-après dans la description, capteur SAW.

Une bande de fréquences privilégiée pour ce type de systèmes est la bande ISM, acronyme anglo-saxon signifiant «Industrial, Scientific, Medical », ayant pour fréquence centrale la fréquence de 433,9 mégaHertz et la largeur de bande associée de 1,7 mégaHertz (MHz).

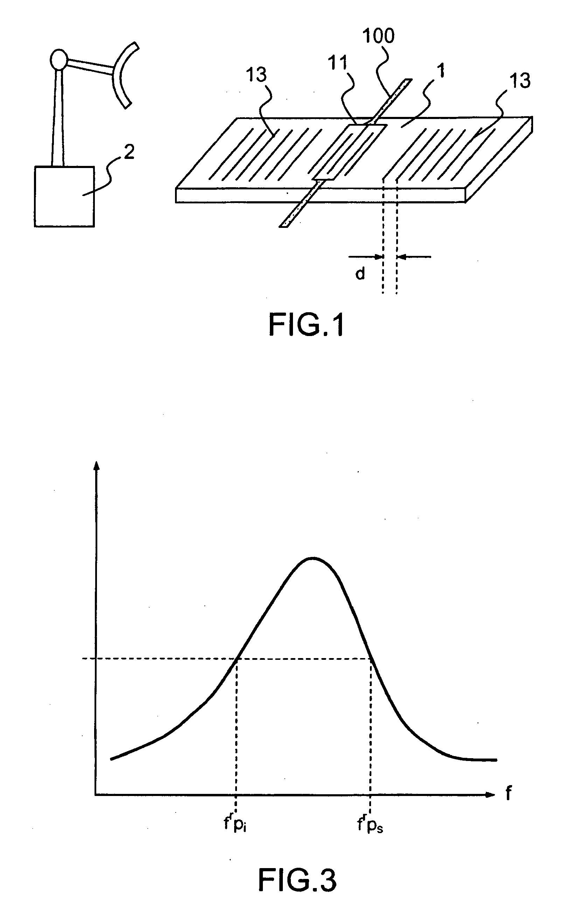

De manière générale un capteur SAW interrogeable à distance et son système d'interrogation peuvent comprendre, comme illustré en figure 1 dans le cas simplifié d'un seul transducteur :

- • un système d'interrogation 2 ;
- • au moins, un résonateur 1 comportant :

   o une antenne 100 ;
   o un transducteur à peigne d'électrodes inter-digitées 11 et une cavité résonante SAW 13 caractérisée par sa fréquence centrale F et son facteur de qualité Q, correspondant au rapport entre la fréquence centrale et la largeur de bande de passante. La cavité 13 comprend deux séries de réflecteurs régulièrement espacés d'une distance d. Le transducteur est connecté à l'antenne 100.

L'interrogateur 2 envoie une impulsion radio-fréquence longue pour charger le résonateur 1. A l'arrêt de l'émission, le résonateur se décharge sur sa fréquence de résonance propre avec une constante de temps $\tau$ égale à $Q/\tau F$. Cette décharge du résonateur constitue l'écho en retour détecté par le récepteur de l'interrogateur. Une analyse spectrale permet ensuite de remonter à la fréquence du résonateur qui constitue son identification. Cette analyse peut être effectuée par des algorithmes basés sur la transformation de Fourier, par exemple de type FFT, acronyme anglo-saxon signifiant Fast Fourier Transform. Ce type de traitement par analyse spectrale est particulièrement complexe.

Il a été proposé dans la demande de brevet WO 2008015129, un procédé pour interroger à distance des capteurs passifs de type SAW et fondé sur une méthode de modulation de fréquence. Plus précisément cette demande divulgue un procédé pour mesurer la fréquence de résonance d'un résonateur qui comporte les étapes suivantes :

- - l'émission successive de signaux radio-fréquences de fréquences porteuses connues et modulées en fréquence incluant la fréquence de résonance ;
- - la réception par un système de réception, des ondes de réponse du capteur ;
- - l'analyse spectrale des ondes de réponse du capteur.

L'émission RF est modulée en fréquence avec une modulation $\omega_m$ et une amplitude de modulation typiquement de l'ordre du kHz.

Le signal de réponse du capteur est modulé en amplitude avec une fréquence de modulation $\omega_m$.

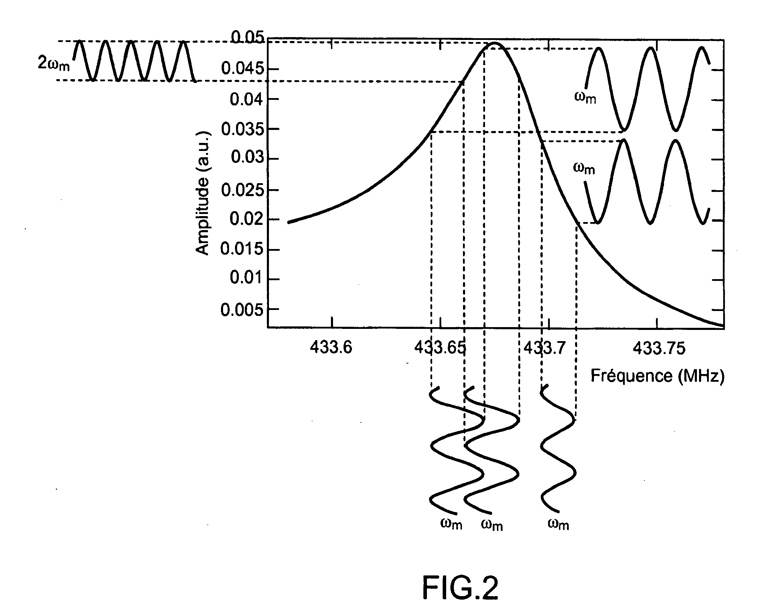

Le principe de la mesure décrit ci-dessus repose sur la conversion d'une modulation de fréquence (émission) en une modulation d'amplitude par la fonction de transfert du résonateur comme illustré en figure 2. Une émission à pulsation de modulation $\omega_m$ (fréquence correspondante $f_m$) se traduit par une réception sur le détecteur de puissance d'un signal modulé à la fréquence $\omega_m$, mais plus important, par un retournement ou non de la phase du signal modulé selon que l'on soit en dessous ou au dessus de la fréquence de résonance.

La sinusoïde injectée dans le signal à la fréquence $\omega_m$, représentant le signal modulant, est soit directement convertie en modulation d'amplitude par la fonction de transfert du résonateur (pente positive sous la fréquence de résonance, modulation d'amplitude en phase avec la modulation de fréquence), soit en son opposé (pente négative au dessus de la fréquence de résonance, modulation d'amplitude en opposition de phase avec la modulation de fréquence). Le point intermédiaire correspond à une annulation de la contribution au signal de réception à la fréquence de modulation $f_m$.

Autour de cette position fréquentielle, l'amplitude de la composante du signal à la fréquence $f_m$ varie linéairement.

La demanderesse est partie du constat que lors de la mise en oeuvre d'un algorithme réalisant la fonction décrite précédemment à savoir, la transformation de la contribution à la fréquence de modulation en une information signée autour de l'annulation de la contribution à la fréquence de modulation $f_m$, et lors de la détection de l'amplitude, bien qu'une sinusoïde soit émise pour générer la modulation de fréquence, il était possible de n'exploiter que deux composantes du signal reçu, et ce respectivement aux fréquences maximum et minimum de la modulation, ce constat permettant de réduire de manière très significative les durées d'interrogation. C'est pourquoi, la présente invention a plus précisément pour objet un procédé d'interrogation tirant parti de la rotation de phase présente dans la réponse du signal de réception de l'art antérieur précédemment cité, pour extraire de la réponse du capteur autour de ce point d'annulation une information dite signée, c'est-à-dire avec une pondération négative ou une pondération positive, favorable pour la mise en place d'un asservissement afin de définir avec précision la fréquence de résonance du résonateur et ce avec des temps d'interrogation beaucoup plus courts que dans l'art antérieur cité.

Plus précisément la présente invention a pour objet un procédé d'interrogation à distance d'un capteur passif comportant au moins un résonateur acoustique, permettant de déterminer la fréquence de résonance dudit résonateur présentant une courbe de résonance définie par conception dudit résonateur, caractérisé en ce qu'il comporte les étapes suivantes :

- une étape préalable de balayage en fréquence d'interrogation dudit résonateur dans une gamme de fréquences déterminée par conception dudit résonateur, permettant la détermination rapide d'une courbe de résonance centrée sur une fréquence de résonance préalable $fr_0$ comprise entre une fréquence préalable inférieure $fr_{pi}$ et une fréquence préalable supérieure $frp_s$ définies à mi-hauteur de ladite courbe de résonance dudit résonateur, par détection de l'amplitude de signal de réponse dudit résonateur ;
- une première étape d'un premier couple d'interrogations dudit résonateur à une première fréquence $f_{11}$ et à une deuxième fréquence $f_{21}$ telles que : $f_{11} = f_{r0} - f_m/2$ et $f_{21} = f_{r0} + f_m/2$, avec :

$$f_m < fr_{ps} - fr_{pi}$$ et permettant de définir un premier couple d'amplitudes d'un premier signal et d'un second signal de réception $Pf_{11}$ et $Pf_{21}$ ;

- une seconde étape comportant la détermination de la différence des amplitudes des premier et second signaux $\Delta(Pf_{11}- Pf_{21})$, ladite différence étant signée négativement ou positivement ;
- une troisième étape permettant de définir une première fréquence de résonance $fr_1$ asservie sur ladite différence d'amplitudes signées et répondant à l'équation suivante :

$$fr_1 = fr_0 + K^*[\Delta(Pf_{11}-Pf_{21}) - Ca]$$, avec Ca une consigne d'asservissement et K une constante ;

- la réitération des première, seconde et troisième étapes et la définition d'une (i+1)ième fréquence de résonance à partir d'une ième fréquence, répondant à la formule suivante :

$$fr_{i+1}= fr_i + K^*[\Delta(Pf_{1i}-Pf_{2i}) - Ca],$$

de manière à obtenir une fréquence de résonance déterminée ($fr_{i+1}$) telle que la différence d'amplitudes signée $\Delta(Pf_{1i}-Pf_{2i})$ soit égale à la consigne d'asservissement Ca.

Selon une variante de l'invention, l'étape préalable de balayage en fréquence d'interrogation dudit résonateur dans une bande de fréquences permettant la détermination rapide d'une première fréquence de résonance $fr_0$ dudit résonateur est effectuée avec un pas de fréquence égal à environ le tiers de la largeur à mi-hauteur de la courbe de résonance définie par conception dudit résonateur.

Selon une variante de l'invention, la bande de fréquences est la bande ISM :

Selon une variante de l'invention, la fréquence $f_m$ est inférieure à quelques dizaines de kiloHertz (kHz).

Selon une variante de l'invention, la consigne d'asservissement est nulle.

Selon une variante de l'invention, la constante K est égale à 1.

L'invention sera mieux comprise et d'autres avantages apparaîtront à la lecture de la description qui va suivre donnée à titre non limitatif et grâce aux figures annexées parmi lesquelles :

- la figure 1 illustre le principe d'interrogation d'un capteur SAW selon l'art connu ;
- la figure 2 illustre la conversion d'une modulation de fréquence (en émission) en une modulation d'amplitude par la fonction de transfert dans un procédé d'interrogation selon l'art connu ;
- la figure 3 illustre l'étape préalable de balayage en fréquence permettant de déterminer les fréquences $f_{rpi}$ et $f_{rps}$ ;
- la figure 4 illustre les couples d'interrogation et la détermination de la différence de puissance signée exploitée dans la présente invention.

Selon la présente invention, le procédé d'interrogation comprend ainsi une étape préalable de balayage en fréquence d'interrogation dudit résonateur dans une gamme de fréquences connue par la conception même du résonateur concerné et permettant la détermination rapide d'une première fréquence de résonance $fr_0$ dudit résonateur par détection de l'amplitude du signal de réponse dudit résonateur. Typiquement il pourra être intéressant pour de nombreuses applications de se positionner dans la bande ISM citée précédemment (ou une autre bande ISM compatible de l'utilisation des résonateurs radio-fréquences, en particulier ceux à ondes élastiques).

La figure 3 illustre une telle courbe sur laquelle on est en mesure de définir la fréquence de résonance préalable et les deux fréquences $fr_{pi}$ et $fr_{ps}$ permettant de déterminer la fréquence $f_m$ choisie inférieure à la différence : $fr_{ps} - fr_{ps}$

Il est à noter que le choix de l'écart des fréquences d'interrogation est effectué selon un compromis entre la puissance renvoyée et la précision de la mesure. En effet, plus ces fréquences sont éloignées de la fréquence de résonance, moins on reçoit de puissance en retour, mais plus la mesure est néanmoins précise.

La demanderesse a constaté que l'influence de la fréquence $f_m$ ne semble par affecter la résolution de la mesure lorsqu'elle est comprise entre 1 kHz et 50 kHz Cependant, choisir une fréquence $f_m$ trop grande dégrade la portée de la mesure, le résonateur étant peu efficace loin de sa résonance. Typiquement on pourra choisir dans la bande ISM centrée en 433,9 MHz, une fréquence $f_m$ de l'ordre de 10kHz.

Le procédé d'interrogation de l'invention est alors effectué de manière itérative.

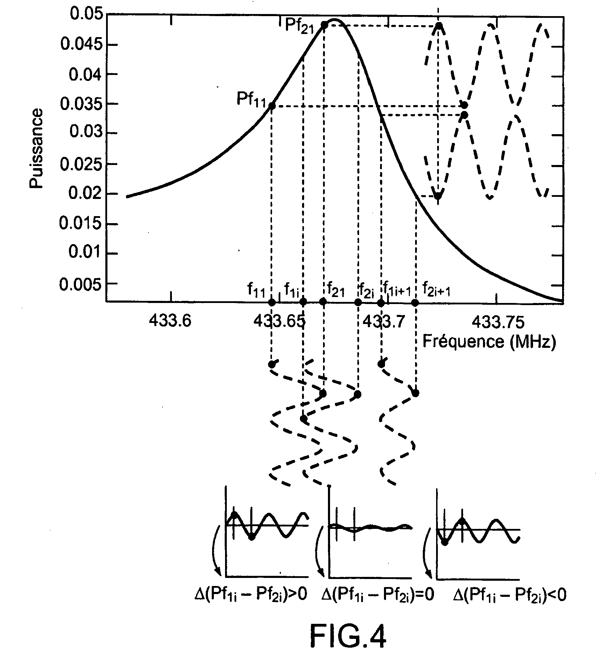

Dans une première étape, l'interrogation est initiée à une première fréquence $f_{11}$ et à une deuxième fréquence $f_{21}$ telles que : $f_{11} = f_{r0} - f_m/2$ et $f_{21} = f_{r0} + f_m/2$, permettant de définir un premier couple d'amplitudes $Pf_{11}$, $Pf_{21}$ d'un premier signal et d'un second signal de réception, comme illustré en figure 4.

Dans une seconde étape, on procède à la détermination de la différence des amplitudes $\Delta(Pf_{11} - Pf_{21})$, ladite différence étant signée.

Dans une troisième étape, on définit une première fréquence de résonance $fr_1$ asservie sur ladite différence d'amplitudes signée et répondant à l'équation suivante :

$$fr_1 = fr_0 + K*[\Delta(Pf_{11} - Pf_{21}) - Ca],$$ avec Ca une consigne d'asservissement et K une constante.

On procède alors à la réitération des première, seconde et troisième étapes comportant la définition d'une i+1ème fréquence de résonance répondant à la formule suivante :

$$fr_{i+1} = fr_i + K*[\Delta(Pf_{1i} - Pf_{2i}) - Ca],$$

de manière à obtenir une fréquence de résonance déterminée $fr_{i+1}$ telle que la différence d'amplitudes signée $\Delta(Pf_{1i} - Pf_{2i})$ soit égale à la consigne d'asservissement Ca.

Par exemple, Ca peut être choisie égale à 0.

Avec Ca égale à 0, le procédé d'itération est terminé lorsque la condition $\Delta(Pf_{1i} - Pf_{2i}) = 0$.

Ainsi et selon l'invention, le signal reçu pour la première fréquence $f_{11} = fr_0 - fm/2$ contient une information de puissance (ou amplitude) totale correspondant à une valeur moyenne et une contribution de modulation que l'on peut considérer comme « virtuelle » à basse fréquence. Le signal reçu à la seconde fréquence $f_{21} = f_{r0} + f_m/2$ contient une information de puissance (ou amplitude) totale correspondant à une valeur moyenne et une contribution de modulation que l'on peut considérer comme « virtuelle » à haute fréquence.

La contribution de la valeur moyenne est éliminée lors du calcul de la différence des puissances reçues aux fréquences f11 et $f_{21}$ afin d'extraire uniquement la contribution du signal de modulation. La différence des puissances reçues à chaque fréquence fournit une information dont le signe va dépendre de la position par rapport à la fréquence $f_{r0}$. Ainsi selon l'invention, il est proposé de réaliser une fonction itérative permettant d'annuler le résiduel mentionné ci-dessus. Cette étape peut être effectuée par une méthode de dichotomie, par une méthode de Newton ou toute autre méthode permettant l'accélération de la convergence du processus itératif.

Ainsi toute méthode capable de déterminer le zéro d'une fonction est particulièrement adaptable en l'occurrence : la méthode de dichotomie est une approche consistant à réduire l'intervalle de recherche d'un zéro de la fonction traitée par comparaison des signes de cette fonction après estimation. Les échantillons sont toujours pris de sorte que leur signe soit opposé. On divise l'intervalle en deux puis l'on identifie le nouvel intervalle pour lequel les nouveaux échantillons sont de signes opposés. On poursuit le processus jusqu'à respect du critère de convergence. La méthode de Newton quant à elle s'appuie sur l'exploitation de la série de Taylor au premier ordre au voisinage du zéro à identifier. A chaque nouvelle prise d'échantillon on calcule la dérivée première de la courbe pour l'échantillon le plus éloigné du zéro et l'on exploite la dérivée première pour déduire une estimation de celui-ci. Le processus converge ou bout d'un nombre d'itérations d'autant plus faible que la courbe est régulière et monotone au voisinage du point recherché. Ces exemples sont fournis à titre d'illustration et peuvent être avantageusement remplacés par des méthodes plus efficaces (Müller, etc.). Une référence bibliographique utile en ce sens est : A. Angot, Compléments de mathématiques, Masson Ed., 6ème Edition, 1982, et à l'international Abramowitz and Stegun. Handbook of Mathematical Functions, on line http:

//www.math.ucla.edu/~cbm/aands/

On réalise ainsi un asservissement de la fréquence $f_{r0}$ qui coïncide avec la fréquence de résonance du capteur interrogé. Cet asservissement s'apparente à une boucle à verrouillage de phase dont les caractéristiques de stabilité et de précision dans la détection de la fréquence cible sont meilleures que les éléments de cette mesure en boucle ouverte.

**Revendications**

1. Procédé d'interrogation à distance d'un capteur passif comportant au moins un résonateur acoustique, permettant de déterminer la fréquence de résonance dudit résonateur présentant une courbe de résonance définie par conception dudit résonateur, **caractérisé en ce qu'**il comporte les étapes suivantes :

   - une étape préalable de balayage en fréquence d'interrogation dudit résonateur dans une gamme de fréquences déterminée par conception dudit résonateur, permettant la détermination rapide d'une courbe de résonance centrée sur une fréquence de résonance préalable ($fr_0$) comprise entre une fréquence préalable inférieure ($fr_{pi}$) et une fréquence préalable supérieure ($fr_{ps}$) définies à mi-hauteur de ladite courbe de résonance dudit résonateur, par détection de l'amplitude de signal de réponse dudit résonateur ;
   - une première étape d'un premier couple d'interrogations dudit résonateur à une première fréquence ($f_{11}$) et à une deuxième fréquence ($f_{21}$) telles que : $f_{11} = f_{r0} - f_m/2$ et $f_{21} = f_{r0} + f_m/2$, avec $f_m < fr_{ps} - fr_{pi}$, permettant de définir un premier couple d'amplitudes d'un premier signal et d'un second signal de réception ($Pf_{11}$, $Pf_{21}$) ;
   - une seconde étape comportant la détermination de la différence des amplitudes des premier et second signaux ($\Delta(Pf_{11}-Pf_{21})$), ladite différence étant signée négativement ou positivement ;
   - une troisième étape permettant de définir une première fréquence de résonance ($fr_1$) asservie sur ladite différence d'amplitudes signées et répondant à l'équation suivante :

   $$fr_1 = fr_0 + K^*[\Delta(Pf_{11}-Pf_{21}) - Ca], \text{ avec Ca une}$$
   consigne d'asservissement et K une constante ;

   - la réitération des première, seconde et troisième étapes et la définition d'une (i+1)ème fréquence de résonance ($f_{ri+1}$) à partir d'une ième fréquence de résonance ($f_{ri}$) répondant à la formule suivante :

$$fr_{i+1} = fr_i + K^*[\Delta(Pf_{1i}-Pf_{2i}) - Ca],$$

de manière à obtenir une fréquence de résonance déterminée ($fr_{i+1}$) telle que la différence d'amplitudes signée ($\Delta(Pf_{1i}-Pf_{2i})$) soit égale à la consigne d'asservissement (Ca).

2. Procédé d'interrogation à distance d'un capteur passif selon la revendication 1, **caractérisé en ce que** l'étape préalable de balayage en fréquence d'interrogation dudit résonateur dans une bande de fréquences permettant la détermination rapide d'une première fréquence de résonance ($fr_0$) dudit résonateur est effectuée avec un pas de fréquences égal à environ le tiers de la large à mi-hauteur de la courbe de résonance.

3. Procédé d'interrogation à distance d'un capteur passif selon l'une des revendications 1 ou 2, **caractérisé en ce que** la bande de fréquences est une bande ISM, et plus particulièrement celle centrée en 433,9 MHz.

4. Procédé d'interrogation à distance d'un capteur passif selon l'une des revendications 1 à 3, **caractérisé en ce que** la fréquence $f_m$ est inférieure à quelques dizaines de kilohertz.

5. Procédé d'interrogation à distance d'un capteur passif selon l'une des revendications 1 à 4, **caractérisé en ce que** la consigne d'asservissement est nulle.

6. Procédé d'interrogation à distance d'un capteur passif selon l'une des revendications 1 à 5, **caractérisé en ce que** la constante K est égale à 1.

**Patentansprüche**

1. Verfahren zum Fernabfragen eines passiven Sensors, der wenigstens einen akustischen Resonator umfasst, mit dem die Resonanzfrequenz des Resonators ermittelt werden kann, der eine durch die Bauart des Resonators definierte Resonanzkurve aufweist, **dadurch gekennzeichnet, dass** es die folgenden Schritte beinhaltet:

   - einen Vorab-Abtastschritt mit der Abfragefrequenz des Resonators in einem durch die Bauart des Resonators bestimmten Frequenzbereich, der die schnelle Ermittlung einer Resonanzkurve zulässt, die auf einer Vorab-Resonanzfrequenz ($fr_0$) zwischen einer unteren Vorabfrequenz ($fr_{pi}$) und einer oberen Vorabfrequenz ($fr_{ps}$) zentriert ist, die in der halben Höhe der Resonanzkurve des Resonators definiert werden, durch Erkennen der Antwort-Signalamplitude des Resonators;

- einen ersten Schritt aus einem ersten Abfragepaar des Resonators mit einer ersten Frequenz ($f_{11}$) und einer zweiten Frequenz ($f_{21}$), so dass: $F_{11} = f_{r0} - f_m/2$ und $f_{21} = f_{r0} + f_m/2$, wobei $f_m < fr_{ps} - fr_{pi}$, so dass ein erstes Amplitudenpaar eines ersten und eines zweiten Empfangssignals ($Pf_{11}$, $Pf_{21}$) definiert werden kann;

- einen zweiten Schritt, der das Ermitteln der Differenz zwischen den Amplituden des ersten und zweiten Signals ($\Delta(Pf_{11}-Pf_{21})$) beinhaltet, wobei die Differenz ein negatives oder ein positives Vorzeichen hat;

- einen dritten Schritt, mit dem eine erste Resonanzfrequenz ($fr_1$) definiert werden kann, die auf die Amplitudendifferenz mit Vorzeichen geregelt wird und der folgenden Gleichung entspricht:

$fr_1 = fr_0 + K*[\Delta(Pf_{11}-Pf_{21}) - Ca]$, wobei Ca eine Regelgröße und K eine Konstante ist;

- Wiederholen des ersten, zweiten und dritten Schrittes und Definieren einer $(i+1)^{ten}$ Resonanzfrequenz ($f_{ri+1}$) auf der Basis einer $i^{ten}$ Resonanzfrequenz ($f_{ri}$) entsprechend der folgenden Formel:

$$fr_{i+1}=fr_i + K*[\Delta(Pf_{11}-Pf_{21}) - Ca],$$

um eine ermittelte Resonanzfrequenz ($fr_{i+1}$) zu erhalten, so dass die Amplitudenfrequenz ($\Delta(Pf_{11}-Pf_{21})$) mit Vorzeichen gleich der Regelgröße (Ca) ist.

2. Verfahren zum Fernabfragen eines passiven Sensors nach Anspruch 1, **dadurch gekennzeichnet, dass** der Vorab-Abtastschritt mit der Abfragefrequenz des Resonators in einem Frequenzband, mit dem eine erste Resonanzfrequenz ($fr_0$) des Resonators mit einem Frequenzgang von etwa einem Drittel der Breite in der Hälfte der Resonanzkurve schnell ermittelt werden kann.

3. Verfahren zum Fernabfragen eines passiven Sensors nach Anspruch 1 oder 2, **dadurch gekennzeichnet, dass** das Frequenzband ein ISM-Band ist, das insbesondere auf 433,9 MHz zentriert ist.

4. Verfahren zum Fernabfragen eines passiven Sensors nach einem der Ansprüche 1 bis 3, **dadurch gekennzeichnet, dass** die Frequenz $F_m$ kleiner als einige zehn Kilohertz ist.

5. Verfahren zum Fernabfragen eines passiven Sensors nach einem der Ansprüche 1 bis 4, **dadurch gekennzeichnet, dass** die Regelgröße null ist.

6. Verfahren zum Fernabfragen eines passiven Sensors nach einem der Ansprüche 1 bis 5, **dadurch gekennzeichnet, dass** die Konstante K gleich 1 ist.

**Claims**

1. A method for remotely polling a passive sensor comprising at least one acoustic resonator, allowing the resonant frequency of said resonator to be determined with a resonant curve that is defined according to the design of said resonator, **characterised in that** it comprises the following steps:

    - a prior step of scanning said resonator at the polling frequency within a frequency range determined according to the design of said resonator, allowing the rapid determination of a resonant curve centred on a prior resonant frequency ($fr_0$), which is between a lower prior frequency ($fr_{pi}$) and an upper prior frequency ($fr_{ps}$) defined at the mid-height of said resonant curve of said resonator, by detecting the response signal amplitude of said resonator;
    - a first step of a first pair of polls of said resonator at a first frequency ($f_{11}$) and a second frequency ($f_{21}$) such that: $f_{11} = f_{r0} - f_m/2$ and $f_{21}=f_{r0}+f_m/2$, with $f_m < fr_{ps}-fr_{pi}$, allowing a first pair of amplitudes of a first signal and a second reception signal ($Pf_{11}$, $Pf_{21}$) to be defined;
    - a second step comprising determining the difference between the amplitudes of the first and second signals ($\Delta(Pf_{11}-Pf_{21})$), said difference being negatively or positively signed;
    - a third step of defining a first resonant frequency ($fr_1$) governed by said difference in signed amplitudes and complying with the following equation:

    $fr_1 = fro + K*[\Delta(Pf_{11}-Pf_{21}) - Ca]$, with Ca being a control setpoint and K a constant;

    - repeating the first, second and third steps and defining an (i+1)nth resonant frequency ($f_{ri+1}$) on the basis of an nth resonant frequency ($f_{ri}$) complying with the following formula:

    $$fr_{i+1}=fr_i + K*[\Delta(Pf_{11}-Pf_{21}) - Ca],$$

    so as to obtain a determined resonant frequency ($fr_{i+1}$) such that the difference in signed amplitudes $\Delta(Pf_{11}-Pf_{21})$) is equal to the control setpoint (Ca).

**2.** The method for remotely polling a passive sensor according to claim 1, **characterised in that** the prior step of scanning said resonator at the polling frequency within a frequency band that allows the rapid determination of a first resonant frequency ($f_{r0}$) of said resonator to be carried out with a frequency response equal to approximately one third of the width of the resonant curve at mid-height.

**3.** The method for remotely polling a passive sensor according to claim 1 or 2, **characterised in that** the frequency band is an ISM band and, more particularly, it is centred on 433.9 MHz.

**4.** The method for remotely polling a passive sensor according to any one of claims 1 to 3, **characterised in that** the frequency $f_m$ is less than a few tens of kilohertz.

**5.** The method for remotely polling a passive sensor according to any one of claims 1 to 4, **characterised in that** the control setpoint is zero.

**6.** The method for remotely polling a passive sensor according to any one of claims 1 to 5, **characterised in that** the constant K is equal to 1.

FIG.1

FIG.3

FIG.2

FIG.4

EP 2 378 286 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008015129 A

**Littérature non-brevet citée dans la description**

- **A. ANGOT.** Compléments de mathématiques. 1982

- **ABRAMOWITZ ; STEGUN.** Handbook of Mathematical Functions